# EUROPEAN PATENT SPECIFICATION

(11) **EP 1 040 671 B1**
(45) Date of publication and mention of the grant of the patent: **27.12.2006**
(21) Application number: 99941848.6
(22) Date of filing: 03.09.1999
(51) Int. Cl.: H04Q 1/00

(54) **DEVICE AND METHOD FOR INFORMING SUBSCRIBER OF CALL INCOMING DURING DATA COMMUNICATION SERVICE**
EINRICHTUNG UND GERÄT ZUM INFORMIEREN AN EINEN TEILNEHMER EINES ANKOMMENDEN ANRUFES WÄHREND DES DATENKOMMUNIKATIONSDIENSTES
DISPOSITIF ET PROCEDE SERVANT A INFORMER UN ABONNE DE L'ARRIVEE D'UN APPEL PENDANT UN SERVICE DE COMMUNICATION DE DONNEES

(30) Priority: 03.09.1998 KR 9836247
(43) Date of publication of application: 04.10.2000
(73) Proprietor: SAMSUNG ELECTRONICS CO., LTD., Suwon City, Kyungki-do 442-370 (KR)
(72) Inventor: KIM, Nak-Koo;, Songnam-shi, Kyonggi-do 463-060 (KR)
(74) Representative: Grünecker, Kinkeldey, Stockmair & Schwanhäusser Anwaltssozietät
(86) International application number: PCT/KR1999/000517
(87) International publication number: WO 2000/014974

(56) References cited:
- EP-A1- 0 581 528
- WO-A1-97/47127
- US-A- 5 513 251

## Description

The present invention relates to a device and method for data communication, and in particular, to a device and method for informing a subscriber who is data-communicating through a modem of a personal computer (PC) that there is an incoming call.

Typically, a data communication service through a PC is provided by an ANS-D (Access Network Subsystem- Data) through a switching system. While a subscriber is doing data communication including Internet communication through a modem of the PC, he or she cannot receive an incoming call and a calling party continuously hears only a busy tone because the switching system separately operates from the ANS-D.

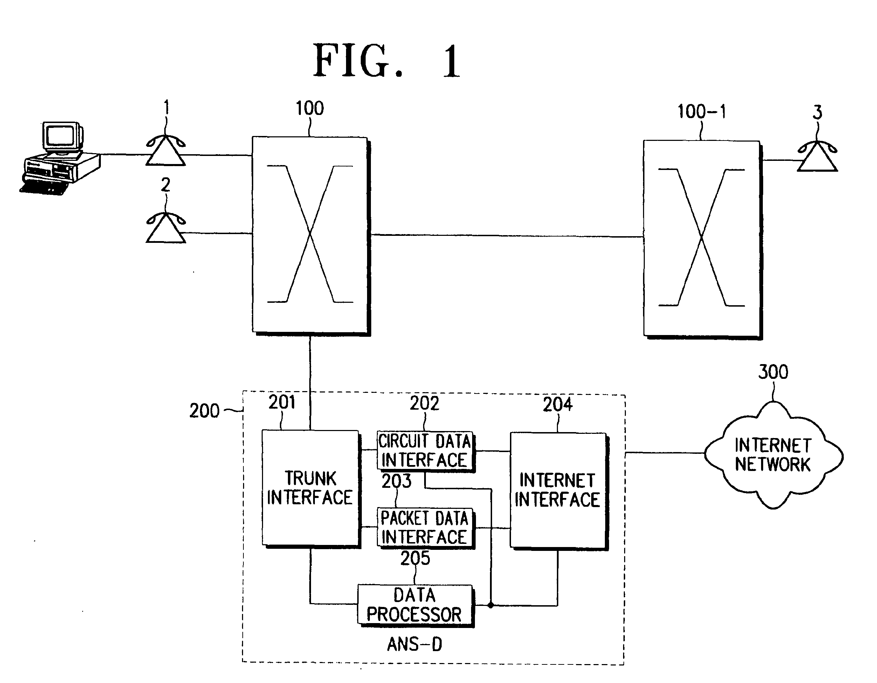

FIG. 1 illustrates a prior art data communication system for providing a PC communication service.

Referring to FIG. 1, a switching system 100 is connected to a plurality of general subscribers or ISDN (integrated Services Digital Network) subscribers. The switching system 100 switches a call from, for example, a subscriber 1 to another subscriber connected to the same switching network or to a subscriber connected to another switching system 100-1. If the subscriber 1 dials a data communication service server's number through a modem or ISDN card of a PC, the switching system 100 switches a call to an ANS-D 200. The ANS-D 200 receives a data communication service request to form a call and provides a data communication service to the subscriber I through the PC.

The ANS-D 200 for providing such a data communication service includes a trunk interface 201, a circuit data interface 202, a packet data interface 203, an Internet interface 204, and a data processor 205.

The data processor 205 functions as a system main controller and is in charge of service call processing and maintenance. The data processor 205 has one Ethernet port for connecting a CAMA (Centralize Automatic Message) center, a network management center and an operation terminal, and has a VME (Versa Module Europe) bus interface which is used as a control path for service call processing and maintenance.

The trunk interface 201 is connected to an ANS-T (Access Network Subsystem-Trunk, not shown) of the switching system 100 and has a time switch. The trunk interface 20 1 connects a communication path from the subscriber to either the circuit data interface 202 or the packet data interface through the AND-T and the time switch. The trunk interface 201 has a VME bus interface used as a control path for call processing and maintenance and has a TDM (Time Division Multiplex) bus interface used as a data path for connecting a communication path with a mobile subscriber. The packet data interface 203 processes data for a packet service call, exchanged with a mobile subscriber or ISDN subscriber. The packet data interface 203 has an interface for call processing and maintenance functions and has an interface for connecting a communication path with a mobile subscriber. The circuit data interface 202 including a modem pool processes data for a circuit service call, exchanged with a subscriber and is in charge of facsimile/modem communication. The Internet interface 204 has at least one port for interfacing with an Internet network 300 and is connected to the Internet network 300 via the port to transmit and receive packet data.

If the subscriber 1 requests to provide an Internet service through the PC, the trunk interface 201 of the ANS-D 200 receives the Internet service request through the switching system 100 and switches the circuit data interface 202 or packet data interface 203 according to a demanded data communication service type. The switched data interface (i.e., the circuit data interface 202 or packet data interface 203) requests the Internet interface 204 to be connected to the Internet network 300. The Internet interface 204 connects the circuit data interface 202 or packet data interface 203 to the Internet network 300. The Internet interface 204 further connects the circuit data interface 202 to a server demanded by the subscriber 1 through the Internet network 300, thereby providing the Internet service to the subscriber 1.

While the data communication or Internet communication service is being provided to the subscriber 1, if a subscriber 2 connected to the same switching system 100 or a subscriber 3 connected to another switching system 100-1 telephones the subscriber 1, a busy tone is sent to the subscriber 2 or subscriber 3. That is, since the switching system 100 separately operates from the ANS-D 200, the subscriber 1 cannot receive a call and the subscriber 2 or the subscriber 3 telephoning the subscriber I hears only the busy tone.

As describe above, since the switching system and the ANS-D independently operate, voice and data communication services are separately provided. A subscriber cannot receive an incoming call during data and Internet communication services and a calling party continues to hear a busy tone.

WO 97 47127 relates to a modem with IP support. A simultaneous access to the services of a switched telephony network and to services of an intemet protocol (IP) based network is provided. The simultaneous access is established over a dialed up connection and is provided using intemet protocols. The disclosure relates a modem which allows access to the switched telephony network and to IP based network from the subscriber end of a subscriber line, whereby simultaneous voice communication and data communication use IP. There is also provided a modem which allows an outgoing call as well as an incoming call on a normal telephone while simultaneously a communication application running on a personal computer is involved in an ongoing IP session over the modem. The modem also provides a simultaneous access to the services of a switched telephony network and to the services of an IP based network. The modem has at least two analogue telephony interfaces to allow a subscriber to have two different telephones which can be operated independently and simultaneously.

US-A-5 513 251 relates to a method for providing call waiting service. A communication system is considered, where the modems applied in the public switched telephone network are simultaneous voice/data modems. The disruption on the data channel caused by use of the conventional call waiting feature is overcome using the simultaneous voice/data modems. The call waiting signal is supplied over only one of the channels made available by such a simultaneous voice/data modem. The call waiting signal is coupled into the network side of the simultaneous voice/data modem that is provisioned in the public switched telephone network for providing simultaneous voice and data service. A data call that is in progress will not be disturbed by the coupling of an audible signal into the voice channel. The user's local simultaneous voice/data modem is connected with a simultaneous voice/data modem in the network. Signaling that a voice call is waiting can be provided over the voice channel or the data channel. Signaling that a data call is waiting can be provided over the voice channel or the data channel.

It is the object of the present invention to provide a device and method that can simultaneously provide voice and data communication services and can inform a subscriber of an incoming call during a data communication service.

This object is solved by the subject matter of the independent claims.

Preferred embodiments are described in the dependent claims.

In one aspect of the present invention, a device for informing a subscriber who is data-communicating of an incoming call in a switching system of a data communication system. The device includes a data access network subsystem for providing a data communication service over a prescribed channel in response to a data communication service request, and transmitting a call incoming alarm message to the subscriber, who is data-communicating through a telephone line, in the form of a data control code upon receipt of a call incoming message for the subscriber; a subscriber access network subsystem for transmitting the call incoming message to the data access network subsystem and receiving the call incoming alarm message to transmit the received call incoming message to the subscriber through the telephone line: and a switch network subsystem for switching signals between the data access network subsystem and the subscriber access network subsystem.

In another aspect of the present invention, there is provided a method for informing a subscriber who is data-communicating of an incoming call in a data communication switching system including a subscriber access network subsystem, a data access network subsystem, and a switch network subsystem interlinking the subscriber access and data access network subsystems. The method includes the steps of transmitting a call incoming message from the subscriber access network subsystem to the data access network subsystem via the switch network subsystem when the incoming call to the subscriber who is data-communicating is received; transmitting a call incoming alarm message from the data access network subsystem to the subscriber access network subsystem via the switch network subsystem; and transmitting the call incoming alarm message from the subscriber access network subsystem to the subscriber via a data communication path to inform the subscriber of the incoming call.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating a prior art data communication system for providing a PC communication service;
FIG. 2 is a block diagram illustrating a switching system according to an embodiment of the present invention; and
FIGs. 3A and 3B are flow charts illustrating the process of informing a subscriber of an incoming call during a data communication service according to an embodiment of the present invention.

### DETAILED DESCRIPTION OF THE PREFERRED EMBODIMENT

A. preferred embodiment of the present invention will be described herein below with reference to the accompanying drawings. In the following description, well-known functions or constructions are not described in detail since they would obscure the invention in unnecessary detail.

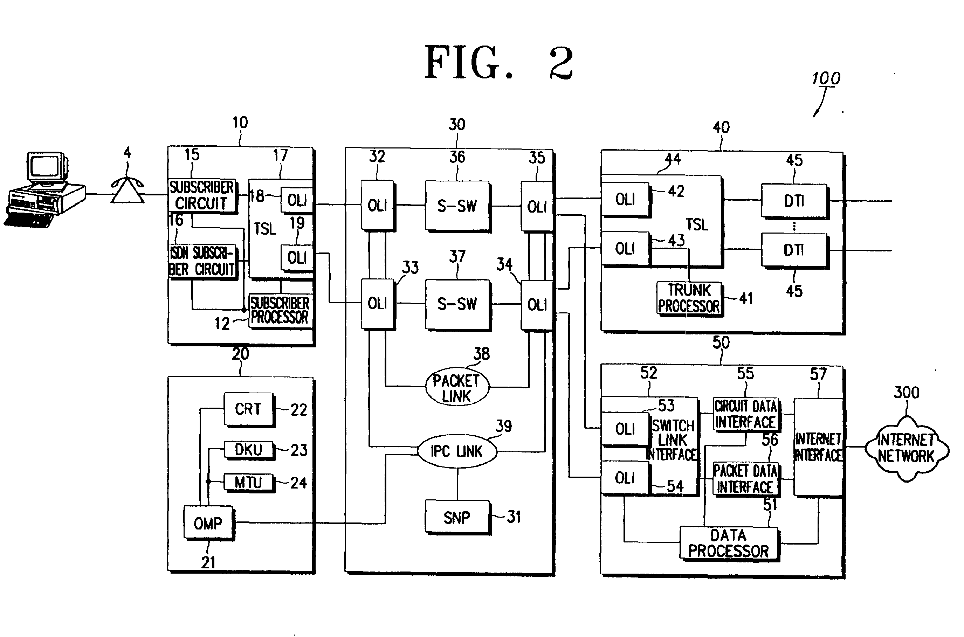

Referring to FIG. 2, a switching system 100 according to the present invention includes an ANS-C (Access Network Subsystem-Control) 10, an OMS (Operation and Maintenance Subsystem) 20, a SNS (Switch Network subsystem) 30, an ANS-T (Access Network Subsystem- Trunk) 40, and an ANS-D (Access Network Subsystem- Data) 50.

The ANS-C 10 includes a subscriber circuit 15 connected to a plurality of general subscribers, an ISDN subscriber circuit 16 connected to a plurality of ISDN subscribers, a time switch and local data link (TSL) 17 including two optic link interfaces (OLIs) 18 and 19, and a subscriber processor 12 of an access network processor (ANP) for controlling the overall operation of the ANS-C 10. The ANS-C 10 which is connected to general subscribers and ISDN subscribers receives dial numbers, processes subscriber signals, and carries out a concentration function.

The OMS 20 includes an operation and maintenance processor (OMP) 21 for controlling the overall operation of the OMS 20, a cathode-ray tube (CRT) 22 of a peripheral device, a disk unit (DKU) 23, and a magnetic tape unit (MTU) 24. The OMS 20 communicates with the system, and manages and collects billing statistics.

The SNS 30 includes a plurality of OLIs 32-35, space switches (S-SWs) 36 and 37, a packet link 38 for processing packet data applied to the ISDN subscriber, an interprocessor communication (IPC) link 39 for controlling IPC, and a switch network processor (SNP) 31 for controlling the overall operation of the SNS 30. The IPC through the IPC link 39 is performed by transmitting and receiving an IPC message. A structure of the IPC message is listed below in Table 1.

**Table 1**

| | | |
|---|---|---|
| Physical Address | 2 bytes | Header |
| Message Type | 1 byte | Header |
| Message sequence Number | 1 byte | Header |
| Piggyback Number | 1 byte | Header |
| Destination Address | 4 bytes | Header |
| Source Address | 4 bytes | Header |
| Signal Identifier | 2 bytes | Header |
| Signal Priority | 1 byte | Header |
| Message length only | 1 byte | Header |
| Message Content | N bytes | Body |
| S/W Sumcheck Flag | 4 bytes | Tail |

The IPC message is divided according to the contents of the message into a message header ranging from a physical address to a message length only, a massage body of a message content, and a tail of a software sumcheck flag. A system message without the message body is used for controlling the system and a general message is provided to general subscribers. According to size, the general message is classified into a short-form message of 78 bytes and a long-form message of 254 bytes.

In Table 1. the physical address indicates a physical address of a processor to be received, the message type indicates an initial signal, and the destination address indicates an address of a processor to be received. The sumcheck flag is assigned to check whether the message has an error. The message content area is actually used by a user program and its size is N(<228) bytes. If there is an incoming call while a subscriber 4 is data-communicating, an initial signal representing a call incoming message is inserted as the message type in the IPC message transmitted from the ANP 12 to a data processor 51. The message content is comprised of a 16-bit destination number (DN).

The ANS-T 40, which is an interoffice repeater connected to another switching system, includes a plurality of digital trunk interfaces (DTIs) 45, a TSL 44 including OLIs 42 and 43, and a trunk processor 41 of an ANP for controlling the overall operation of the ANS-T 40. The ANS-T 40 is connected to a mobile switching system (not shown) and interfaces signals with mobile terminals and general subscribers or ISDN subscribers.

The SNS 30, ANS-C 10 and ANS-T 40 are connected to each other through respective OLIs.

The ANS-D 50 includes a switch link interface 52, a circuit data interface 55, a packet data interface 56, an Internet interface 56, and a data processor 51.

The switch link interface 52 includes OLIs 53 and 54. The switch link interface 52 interfaces with the SNS 30 through the OLI 53 connected to the OLI 35 and through the OLI 54 connected to the OLI 34, thereby processing a data service call and connecting a communication path. The switch link interface 52 further includes a time switch to switch data received through a link from a mobile subscriber and PSTN subscriber to the circuit data interface 55 or packet data interface 56. The switch link interface 52 has a VME bus interface as a control path for call processing and maintenance and has a TDM bus interface as a data path for connecting the mobile subscriber and PSTN subscriber to the communication path.

The data processor 51 communicates with an upper processor (not shown) within the system and processes all types of service calls within the subsystem.

The circuit data interface 55 processes PPP (Point-to-Point Protocol), IP (Internet Protocol), and TCP (Transfer Communication Protocol) protocols for transmitting data to a terminal, processes modem protocol for communicating with a PSTN subscriber modem, and processes facsimile protocol for communicating with a PSTN subscriber facsimile.

The packet data interface 56 processes a call to connect a packet service call to a mobile terminal over a data transmission channel. The packet data interface 56 monitors the state of a packet processing device and manages statistics and errors.

The Internet interface 57 processes a call to connect a packet service call with Internet. The Internet interface 57 serves as a PPP server for PPP connection with the terminal, monitors the state of an Ethernet port, and manages statistics and errors.

In the procedure of the switching system for connecting a call with Internet, which is described below, a general subscriber and a general wire telephone are interchangeably used with the same reference numeral.

If it is desired that a general subscriber 4 connects data communication or Internet through a PC. he or she dials a dial number providing data communication or Internet service by using a communication emulator within the PC. The PC then transmits the dial number to the switching system 100 through a modem. The switching system 100 analyzes the dial number and handshakes with a modem pool of the circuit data interface 55 via the subscriber circuit 15, OLI 18 of TSL 17, OLI 32 of the SNS 30, S-SW 36, OLI 35, and switch link interface of the ANS-D 50.

Thereafter, the modem pool of the circuit data interface 55 sends the data processor 51 information (for instance, communication bit rate, error correction and compression) communicating with the PC and sends the PC an initial screen. Then the subscriber 4 can see a menu screen through the PC. If the subscriber 4 selects Internet on the menu screen, this select information is transmitted to the Internet interface 57 via the circuit data interface 55. The Internet interface 57 then communicates with the emulator within the PC through the PPP and assigns an IP address to the PC. The PC receives the IP address and drives a web browser. If the subscriber selects a desired site after the web browser is driven, the Internet interface 57 connects the site through the Internet network 300 and provides an Internet service through the TCP between the subscriber and the site.

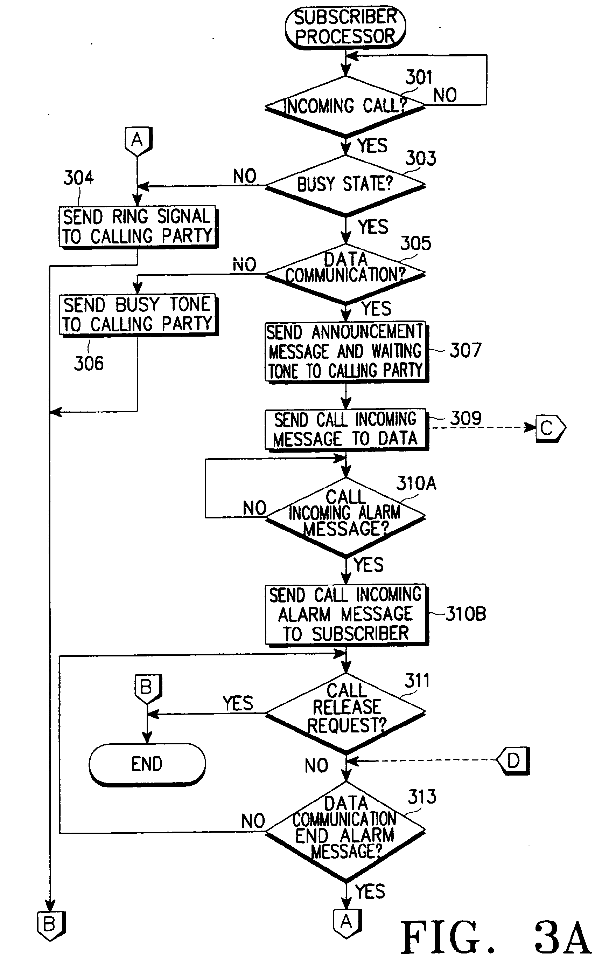

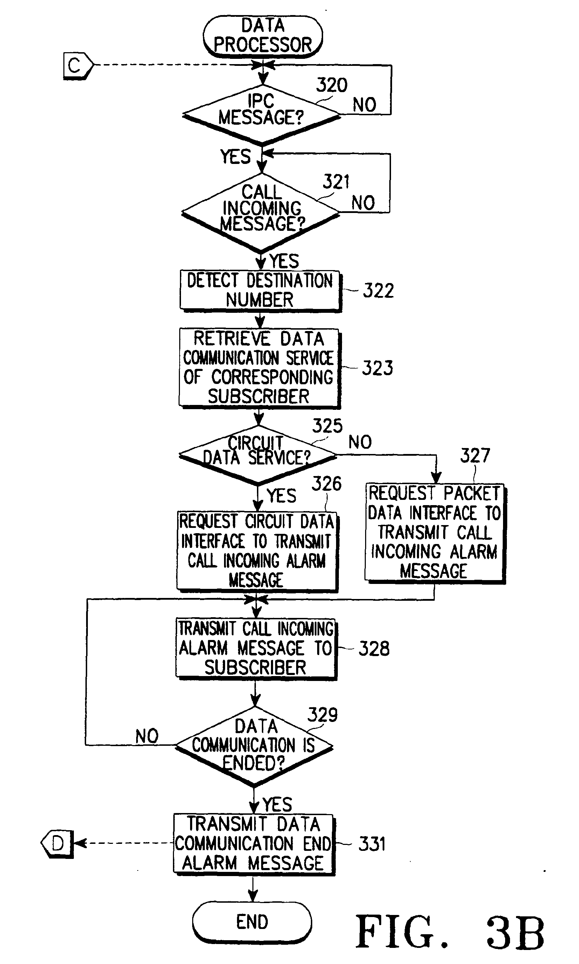

While data communication or Internet is provided to the subscriber, if an incoming call is received from another subscriber connected to the ANS-T 40 or to the same switching system 100, the subscriber processor 12 of the ANS-C 10 and the data processor 51 of the ANS-D 50 execute the operation illustrated in FIGs. 3A and 3B.

Referring to FIGs. 3A and 3B, the subscriber processor 12 determines at step 301 if an incoming call is detected from another subscriber (i.e., calling party) through the subscriber circuit 15, ISDN subscriber circuit 16 or ANS-T 40. If an incoming call from the calling party to the general subscriber 4 is detected, the subscriber processor 12 determines if the general subscriber 4 is in a busy state at step 303. If not, a ring signal is sent to the general subscriber 4. If the general subscriber 4 is in a busy state, the subscriber processor 12 checks whether the subscriber 4 is data-communicating at step 305 by examining information about the subscriber 4. If the subscriber 4 is not data-communicating, the subscriber processor 12 sends a busy tone to the calling party at step 306. If the subscriber 4 is data-communicating, the subscriber processor 12 sends, at step 307, an announcement message and a waiting tone to the calling party. Then the calling party should wait until the general subscriber 4 completes data communication.

The subscriber processor 12 transmits, at step 309, a call incoming message to the data processor 51 via the OLI 19 of the TSL 17, the OLI 33 of the SNS 30, the IPC link 39, the OLI 34, and the OLI 54 of the ANS-D 50. The call incoming message indicates the IPC message shown in Table 1. The subscriber processor 12 checks whether a call incoming alarm message is received from the ANS-D 50 at step 310A. Upon receiving the call incoming alarm message, the subscriber processor 12 transmits it to the subscriber 4 at step 310B. Then the PC connected to the subscriber 4 displays on the monitor the call incoming alarm message, for instance, "YOU ARE WANTED ON THE PHONE. END COMMUNICATION, PLEASE." The subscriber processor 12 checks whether the calling party requests to release a call at step 311. If so, the subscriber processor 12 terminates a series of steps. If no call release request is detected, the subscriber processor 12 checks whether a data communication end alarm message is received at step 313.

The data processor 51 determines if an IPC message is received from the subscriber processor 12 at step 320. Upon receiving the IPC message, the data processor 51 checks whether the IPC message indicates a call incoming message by examining a message type at step 321. If the type of the IPC message is a call incoming message, the data processor 51 detects a destination number from the message content of the IPC message at step 322. Upon detecting the destination number, the data processor 51 checks what kind of data communication service is provided to the subscriber 4 having the detected destination number at step 323. The data processor 51 determines if the data communication service is a circuit data service at step 325. If so, the data processor 51 requests the circuit data interface 55 to transmit the call incoming alarm message at step 326. If the data communication service is not a circuit data service, the data processor 51 requests the packet data interface 56 to transmit the call incoming alarm message at step 327. The circuit data interface 55 transmits at step 328 the call incoming alarm message to the subscriber 4 via the OLI 53 of the switch link interface 52, the OLI 35 of the SNS 30, the S-SW 36, the OLI 32, the OLI 18 of the TSL 17, and the subscriber circuit 15. The packet data interface 56 transmits at step 328 the call incoming alarm message to the subscriber 4 via the OLI 54 of the switch link interface 52, the OLI 35 of the SNS 30, the packet link 38, the OLI 33, the OLI 19 of the TSL 17, and the subscriber circuit 15.

If the incoming call alarm message is transmitted, the data processor 51 checks whether the subscriber 4 completes data communication at step 329. If the subscriber 4 does not complete data communication, the data processor 51 requests the circuit data interface 55 or the packet data interface 56 to transmit the call incoming alarm message until the calling party releases a call request. However, if the subscriber 4 completes data communication, the data processor 51 transmits the data communication end alarm message to the subscriber processor 12 at step 331. Upon receiving the data communication end alarm message, the subscriber processor 12 sends a ring signal to the calling party at step 304. Upon answering the phone, the subscriber 4 communicates with the calling party.

As described previously, since the ANS-D is incorporated in the switching system, both a data communication service and a voice service can be provided. Furthermore, since the subscriber can sense that there is an incoming call while he or she is data-communicating, the subscriber can answer the phone and the calling party will not hear a busy tone.

## Claims

1. A device for informing a subscriber (4) who is data-communicating of an incoming call in a switching system (100) of a data communication system, said device comprising:
a data access network subsystem (50) adapted to provide a data communication service over a prescribed channel in response to a data communication service request, and adapted to transmit a call incoming alarm message to the subscriber (4), who is data-communicating through a telephone line, in the form of a data control code upon receipt of a call incoming message for the subscriber (4);
a subscriber access network subsystem (10) adapted to transmit the call incoming message to the data access network subsystem (50) and adapted to receive the call incoming alarm message from the data access network subsystem (50) and adapted to transmit the received call incoming message to the subscriber (4) through the telephone line; and
a switch network subsystem (30) adapted to switch signals between the data access network subsystem and the subscriber access network subsystem.

2. The device as claimed in claim 1, wherein the switch network subsystem has an interprocessor communication link (39) and a packet link (38) for data communication between the access network subsystem and the subscriber (4).

3. The device as claimed in claim 2, wherein the interprocessor communication link (39) is adapted to transmit the call incoming message to the data access network subsystem (50) through the interprocessor communication link (39).

4. The device as claimed in claim 1, wherein the data access network subsystem (50) includes:
a circuit data interface (55) adapted to provide a circuit data service in response to the data communication service request, and adapted to generate the call incoming alarm message upon receipt of the call incoming message during the circuit data service;
a packet data interface (56) adapted to provide a packet data service in response to the data communication service request, and adapted to generate the call incoming alarm message upon receipt of the call incoming message during the packet data service;
a switch link interface (52) adapted to determine a channel type of the data communication service in response to the data communication service request, and adapted to form a link with either the circuit data interface or the packet data interface;
an Internet interface (57) adapted to form a link with an Internet network in response to an Internet network connection request from the circuit data interface or the packet data interface; and
a data processor (51) adapted to control the switch link interface, circuit data interface, packet data interface, and Internet interface.

5. The device as claimed in claim 1, wherein the subscriber access network subsystem (10) includes:
a general subscriber circuit (15) adapted to connect a plurality of general subscribers;
an Integrated Services Digital Network, ISDN, subscriber circuit (16) adapted to connect a plurality of ISDN subscribers;
a time-division switching circuit adapted to switch signals exchanged with the switch network subsystem to the general subscriber circuit or the ISDN subscriber circuit; and
a subscriber processor (12) adapted to store data communication information for the subscriber who is data-communicating, adapted to transmit the call incoming message to the data access network subsystem upon occurrence of the incoming call to the subscriber who is data-communicating, and adapted to receive the call incoming alarm message through the time-division switching circuit and adapted to transmit the received message to the subscriber through the general subscriber circuit or the ISDN subscriber circuit (16).

6. A method for informing a subscriber who is data-communicating through a telephone line of an incoming call in a data communication switching system (100), said data communication switching system (100) including a subscriber access network subsystem (10), a data access network subsystem (50), and a switch network subsystem (30) interlinking the subscriber access and data access network subsystems, said method comprising the steps of:
(a) transmitting a call incoming message from the subscriber access network subsystem (10) to the data access network subsystem (50) via the switch network subsystem (30) when the incoming call to the subscriber (4) who is data-communicating through the telephone line is received;
(b) transmitting a call incoming alarm message from the data access network subsystem (50) to the subscriber access network subsystem (10) via the switch network subsystem (30); and
(c) transmitting (310B) the call incoming alarm message from the subscriber access network subsystem (10) to the subscriber (4) through the telephone line to inform the subscriber (4) of the incoming call.

7. The method as claimed in claim 6, wherein step (a) includes the steps of:
checking (303) whether the subscriber is in a busy state upon detection of the incoming call;
sending (304) a ring signal to a calling party if the subscriber is not in a busy state, and checking whether the subscriber is data-communicating if the subscriber is in a busy state; and
sending (306) a busy tone to the calling party if the subscriber is not data-communicating, and informing the data access network subsystem of the incoming call to the subscriber if the subscriber is data-communicating.

8. The method as claimed in claim 6, wherein step (b) includes the steps of:
detecting (322) a destination number upon receiving the call incoming message from the subscriber access network subsystem;
retrieving (323) a data communication service type of a subscriber corresponding to the destination number; and
transmitting (328) the call incoming alarm message to the subscriber access subsystem over a channel corresponding to the retrieved data communication service type.

9. The method as claimed in claim 8, further comprising the step of transmitting (331) a data communication end alarm message to the subscriber access network subsystem if the subscriber ends data communication after the call incoming alarm message has been transmitted.

10. The method as claimed in claim 9, further comprising the steps of:
transmitting a waiting announcement message to the calling party if the subscriber is data-communicating; and
establishing a call with the calling party by sending a ring signal to the calling party upon receiving the data communication end alarm message after the waiting announcement message has been transmitted.

11. The method as claimed in claim 10, wherein the waiting announcement message is a waiting tone signal.

## Patentansprüche

1. Vorrichtung zum Informieren eines Teilnehmers (4), welcher Daten kommuniziert, über einen eingehenden Anruf in einem Vermittlungssystem (100) eines Datenkommunikationssystems, die Vorrichtung enthaltend:
ein Datenzugangsnetzsubsystem (50), angepasst, um einen Datenkommunikationsdienst über einen vorgeschriebenen Kanal als Reaktion auf eine Datenkommunikations-Dienstanforderung bereitzustellen, und angepasst, um an den Teilnehmer (4), der über eine Telefonleitung Daten kommuniziert, eine Anrufeingangsalarmmeldung in Form eines Datensteuercodes auf das Empfangen einer Anrufeingangsmeldung für den Teilnehmer (4) zu übertragen;
ein Teilnehmerzugangsnetzsubsystem (10), angepasst, um die Anrufeingangsmeldung an das Datenzugangsnetzsubsystem (50) zu übertragen, und angepasst, um die Anrufeingangsalarmmeldung von dem Datenzugangsnetzsubsystem (50) zu empfangen, und angepasst, um die empfangene Anrufeingangsmeldung an den Teilnehmer (4) durch die Telefonleitung zu übertragen; und
ein Vermittlungsnetzsubsystem (30), angepasst, um Signale zwischen dem Daten-Zugangsnetz-Subsystem und dem Teilnehmerzugangsnetzsubsystem zu vermitteln.

2. Vorrichtung nach Anspruch 1, wobei das Vermittlungsnetzsubsystem eine Interprozessorkommunikationsverbindung (39) und eine Paketverbindung (38) zur Datenkommunikation zwischen dem Zugangsnetzsubsystem und dem Teilnehmer (4) aufweist.

3. Vorrichtung nach Anspruch 2, wobei die Interprozessorkommunikationsverbindung (39) angepasst ist, um die Anrufeingangsmeldung an das Datenzugangsnetzsubsystem (50) durch die Interprozessorkommunikationsverbindung (39) zu übertragen.

4. Vorrichtung nach Anspruch 1, wobei das Datenzugangsnetzsubsystem (50) enthält:
eine Leitungsdatenschnittstelle (55), angepasst, um einen Leitungsdatendienst als Reaktion auf die Datenkommunikationsdienstanforderung bereitzustellen, und angepasst, um die Anrufeingangsalarmmeldung auf den Eingang der Anrufeingangsmeldung während des Leitungsdatendienstes zu erzeugen;
eine Paketdatenschnittstelle (56), angepasst, um einen Paketdatendienst als Reaktion auf die Datenkommunikationsdienstanforderung bereitzustellen, und angepasst, um die Anrufeingangsalarmmeldung auf den Eingang der Anrufeingangsmeldung während des Paketdatendienstes zu erzeugen;
eine Vermittlungsverbindungsschnittstelle (52), angepasst, um einen Kanaltyp des Datenkommunikationsdienstes in Reaktion auf die Datenkommunikationsdienstanforderung zu bestimmen, und angepasst, um eine Verbindung entweder mit der Leitungsdatenschnittstelle oder mit der Paketdatenschnittstelle zu bilden;
eine Internetschnittstelle (57), angepasst, um eine Verbindung mit einem Internetnetz als Reaktion auf eine Internetnetzverbindungsanforderung von der Leitungsdatenschnittstelle oder der Paketdatenschnittstelle zu bilden; und
einen Datenprozessor (51), angepasst, um die Vermittlungsverbindungsschnittstelle, die Leitungsdatenschnittstelle, die Paketdatenschnittstelle und die Internetschnittstelle zu steuern.

5. Vorrichtung nach Anspruch 1, wobei das Teilnehmerzugangsnetzsubsystem (10) enthält:
eine normale Teilnehmerschaltung (15), angepasst, um eine Vielzahl von normalen Teilnehmern zu verbinden;
eine dienstintegrierendes-digitales-Netz-, ISDN-, Teilnehmerschaltung (16), angepasst um eine Vielzahl von ISDN-Teilnehmern zu verbinden;
eine Zeitmultiplexvermittlungsschaltung, angepasst, um mit dem Vermittlungsnetzsubsystem ausgetauschte Signale an die normalen Teilnehmerschaltung oder die ISDN-Teilnehmerschaltung zu vermitteln; und
einen Teilnehmerprozessor (12), angepasst, um eine Datenkommunikationsinformation für den Teilnehmer, welcher Daten kommuniziert, zu speichern, angepasst, um die Anrufeingangsmeldung an das Datenzugangsnetzsubsystem auf das Auftreten des eingehenden Anrufs an den Teilnehmer, welcher Daten kommuniziert, zu übertragen, und angepasst, um die Anrufeingangsalarmmeldung durch die Zeitmultiplexvermittlungsschaltung zu empfangen, und angepasst, um die empfangene Meldung an den Teilnehmer durch die normale Teilnehmerschaltung oder die ISDN Teilnehmerschaltung zu übertragen.

6. Verfahren zum Informieren eines Teilnehmers, der Daten durch eine Telefonleitung kommuniziert, über einen eingehenden Anruf in einem Datenkommunikationsvermittlungssystems (100), wobei das Datenkommunikationsvermittlungssystem (100) ein Teilnehmerzugangsnetzsubsystem (10), ein Datenzugangsnetzsubsystem (50) und ein Vermittlungsnetzsubsystem (30) aufweist, welches das Teilnehmerzugangsnetzsubsystem und das Datenzugangsnetzsubsystem miteinander verbindet, wobei das Verfahren die Schritte aufweist:
(a) Übertragen einer Anrufeingangsmitteilung von dem Teilnehmerzugangsnetsubsystem (10) an das Datenzugangsnetzsubsystem (50) über das Vermittungsnetzsubsystem (30) wenn der eingehende Anruf an den Teilnehmer (4), welcher Daten durch die Telefonleitung kommuniziert, empfangen wird;
(b) Übertragen einer Anrufeingangsalarmmitteilung von dem Datenzugangsnetzsubsystem (50) an das Teilnehmerzugangsnetzsubsystem (10) über das Vermittlungsnetzsubsystem (30); und
(c) Übertragen (310B) der Anrufeingangsalarmmitteilung von dem Teilnehmerzugangsnetzsubsystem (10) an den Teilnehmer (4) durch die Telefonleitung, um den Teilnehmer über den eingehenden Anruf zu informieren.

7. Verfahren nach Anspruch 6, wobei der Schritt (a) die Schritte enthält:
Überprüfen (303), ob sich der Teilnehmer auf die Detektion des eingehenden Anrufs in einem Besetzt-Zustand befindet;
Senden (304) eines Rufsignals an die anrufende Partei, wenn der Teilnehmer nicht in einem Besetzt-Zustand ist, und Überprüfen, ob der Teilnehmer Daten kommuniziert, wenn der Teilnehmer sich in einem Besetzt-Zustand befindet; und
Senden (306) eines Besetzt-Tones an die anrufende Partei, wenn der Teilnehmer nicht Daten kommuniziert und Informieren des Datenzugangsnetzsubsystems über den eingehenden Anruf an den Teilnehmer, wenn der Teilnehmer Daten kommuniziert.

8. Verfahren nach Anspruch 6, wobei der Schritt (b) die Schritte enthält:
Detektieren (322) einer Zielnummer auf das Emfangen der Anrufeingangsmeldung von dem Teilnehmerzugangsnetzsubsystem;
Abrufen (323) eines Datenkommunikationsdiensttyps eines Teilnehmers entsprechend der Zielnummer; und
Übertragen (328) der Anrufeingangsalarmmeldung an das Teilnehmerzugangssubsystem über einen Kanal entsprechend dem abgerufenen Datenkommunikationsdiensttyp.

9. Verfahren nach Anspruch 8, ferner enthaltend den Schritt des Übertragens (331) einer Datenkommunikationendealarmmeldung an das Teilnehmerzugangsnetzsubsystem, wenn der Teilnehmer die Datenkommunikation beendet, nachdem die Anrufeingangsalarmmeldung übertragen wurde.

10. Verfahren nach Anspruch 9, ferner enthaltend die Schritte:
Übertragung einer Warteansagemeldung an die rufende Partei, wenn der Teilnehmer Daten kommuniziert; und
Aufbauen eines Rufes mit der rufenden Partei durch Senden eines Rufsignals an die rufende Partei auf das Empfangen der Datenkommunikationendealarmmeldung nachdem die Warteansagemeldung übertragen wurde.

11. Verfahren nach Anspruch 10, wobei die Warteansagemeldung ein Wartetonsignal ist.

## Revendications

1. Dispositif pour informer d'un appel entrant un abonné (4) qui effectue une communication de données, dans un système de commutation (100) d'un système de communication de données, ce dispositif comprenant :
un sous-système de réseau d'accès de données (50) adapté pour fournir un service de communication de données sur un canal prescrit en réponse à une demande de service de communication de données, et adapté pour émettre un message d'alerte d'entrée d'appel vers l'abonné (4), qui effectue une communication de données au moyen d'une ligne téléphonique, sous la forme d'un code de commande de données, à la réception d'un message d'entrée d'appel pour l'abonné (4) ;
un sous-système de réseau d'accès d'abonnés (10) adapté pour émettre le message d'entrée d'appel vers le sous-système de réseau d'accès de données (50) et adapté pour recevoir le message d'alerte d'entrée d'appel provenant du sous-système de réseau d'accès de données (50), et adapté pour émettre vers l'abonné (4), par la ligne téléphonique, le message d'entrée d'appel reçu ; et
un sous-système de réseau de commutation (30) adapté pour commuter des signaux entre le sous-système de réseau d'accès de données et le sous-système de réseau d'accès d'abonnés.

2. Dispositif selon la revendication 1, dans lequel le sous-système de réseau de commutation a une liaison de communication interprocesseur (39) et une liaison de paquets (38) pour la communication de données entre le sous-système de réseau d'accès et l'abonné (4).

3. Dispositif selon la revendication 2, dans lequel la liaison de communication interprocesseur (39) est adaptée pour émettre le message d'entrée d'appel vers le sous-système de réseau d'accès de données (50) par la liaison de communication interprocesseur (39).

4. Dispositif selon la revendication 1, dans lequel le sous-système de réseau d'accès de données (50) comprend :
une interface de données de circuits (55) adaptée pour fournir un service de données de circuits en réponse à la demande de service de communication de données, et adaptée pour générer le message d'alerte d'entrée d'appel à la réception du message d'entrée d'appel pendant le service de données de circuits ;
une interface de données de paquets (56) adaptée pour fournir un service de données de paquets en réponse à la demande de service de communication de données, et adaptée pour générer le message d'alerte d'entrée d'appel à la réception du message d'entrée d'appel pendant le service de données de paquets ;
une interface de liaison de commutation (52) adaptée pour déterminer un type de canal du service de communication de données en réponse à la demande de service de communication de données, et adaptée pour former une liaison soit avec l'interface de données de circuits, soit avec l'interface de données de paquets ;
une interface Internet (57) adaptée pour former une liaison avec un réseau Internet en réponse à une demande de connexion de réseau Internet provenant de l'interface de données de circuits ou de l'interface de données de paquets ; et
un processeur de données (51) adapté pour commander l'interface de liaison de commutation, l'interface de données de circuits, l'interface de données de paquets et l'interface Internet.

5. Dispositif selon la revendication 1, dans lequel le sous-système de réseau d'accès d'abonnés (10) comprend :
un circuit d'abonnés généraux (15) adapté pour connecter une multiplicité d'abonnés généraux ;
un circuit d'abonnés de Réseau Numérique à Intégration de Services, RNIS, (16) adapté pour connecter une multiplicité d'abonnés RNIS ;
un circuit de commutation temporelle adapté pour commuter vers le circuit d'abonnés généraux ou le circuit d'abonnés RNIS des signaux échangés avec le sous-système de réseau de commutation ; et
un processeur d'abonnés (12) adapté pour stocker de l'information de communication de données pour l'abonné qui effectue une communication de données, adapté pour émettre le message d'entrée d'appel vers le sous-système de réseau d'accès de données à l'apparition de l'appel entrant dirigé vers l'abonné qui effectue une communication de données, et adapté pour recevoir le message d'alerte d'entrée d'appel par l'intermédiaire du circuit de commutation temporelle et adapté pour émettre le message reçu vers l'abonné, à travers le circuit d'abonnés généraux ou le circuit d'abonnés RNIS (16).

6. Un procédé pour informer d'un appel entrant un abonné qui effectue une communication de données par une ligne téléphonique dans un système de commutation de communication de données (100), ce système de commutation de communication de données (100) incluant un sous-système de réseau d'accès d'abonnés (10), un sous-système de réseau d'accès de données (50) et un sous-système de réseau de commutation (30) interconnectant les sous-systèmes de réseau d'accès d'abonnés et d'accès de données, ce procédé comprenant les étapes consistant à :
(a) émettre un message d'entrée d'appel à partir du sous-système de réseau d'accès d'abonnés (10) vers le sous-système de réseau d'accès de données (50) par l'intermédiaire du sous-système de réseau de commutation (30) lorsque l'appel entrant dirigé vers l'abonné (4) qui effectue une communication de données par la ligne téléphonique est reçu ;
(b) émettre un message d'alerte d'entrée d'appel à partir du sous-système de réseau d'accès de données (50) vers le sous-système de réseau d'accès d'abonnés (10) par l'intermédiaire du sous-système de réseau de commutation (30) ; et
(c) émettre (310B) le message d'alerte d'entrée d'appel à partir du sous-système de réseau d'accès d'abonnés (10) vers l'abonné (4) par la ligne téléphonique, pour signaler l'appel entrant à l'abonné (4).

7. Procédé selon la revendication 6, dans lequel l'étape (a) comprend les étapes consistant à :
contrôler (303) si l'abonné est dans un état occupé au moment de la détection de l'appel entrant ;
envoyer (304) un signal de sonnerie à un correspondant appelant si l'abonné n'est pas dans un état occupé, et contrôler si l'abonné est en cours de communication de données si l'abonné est dans un état occupé ; et
envoyer (306) une tonalité d'occupation au correspondant appelant si l'abonné n'est pas en cours de communication de données, et signaler au sous-système de réseau d'accès de données l'appel entrant dirigé vers l'abonné si l'abonné est en cours de communication de données.

8. Procédé selon la revendication 6, dans lequel l'étape (b) comprend les étapes consistant à :
détecter (322) un numéro de destination à la réception du message d'entrée d'appel provenant du sous-système de réseau d'accès d'abonnés ;
extraire (323) un type de service de communication de données d'un abonné correspondant au numéro de destination ; et
émettre (328) le message d'alerte d'entrée d'appel vers le sous-système d'accès d'abonnés sur un canal correspondant au type de service de communication de données extrait.

9. Procédé selon la revendication 8, comprenant en outre l'étape consistant à émettre (331) un message d'alerte de fin de communication de données vers le sous-système de réseau d'accès d'abonnés, si l'abonné met fin à la communication de données après que le message d'alerte d'entrée d'appel a été émis.

10. Procédé selon la revendication 9, comprenant en outre les étapes consistant à :
émettre un message d'annonce d'attente vers le correspondant appelant si l'abonné est en cours de communication de données ; et
établir un appel avec le correspondant appelant en envoyant un signal de sonnerie au correspondant appelant à la réception du message d'alerte de fin de communication de données, après que le message d'annonce d'attente a été émis.

11. Procédé selon la revendication 10, dans lequel le message d'annonce d'attente est un signal de tonalité d'attente.
